# EUROPÄISCHE PATENTSCHRIFT

(11) **EP 3 849 691 B1**
(45) Veröffentlichungstag und Bekanntmachung des Hinweises auf die Patenterteilung: **12.10.2022**
(21) Anmeldenummer: 19746526.3
(22) Anmeldetag: 07.08.2019
(51) Int. Cl.: B01D 46/02

(54) **VORRICHTUNG ZUR ENTSTAUBUNG VON KONVERTERGAS**
DEVICE FOR REMOVING DUST FROM CONVERTER GAS
DISPOSITIF DE DÉPOUSSIÉRAGE DE GAZ DE CONVERTISSEUR

(30) Priorität: 13.09.2018 EP 18194256; 08.11.2018 EP 18205142
(43) Veröffentlichungstag der Anmeldung: 21.07.2021
(73) Patentinhaber: Primetals Technologies Austria GmbH, 4031 Linz (AT)
(72) Erfinder: FLEISCHANDERL, Alexander, 4645 Gruenau (AT); STEINPARZER, Thomas, 4040 Linz (AT); STEINWANDTER, Andreas, 4020 Linz (AT); WIMMER, Erich Stefan, 4210 Gallneukirchen (AT)
(74) Vertreter: Metals@Linz
(86) Internationale Anmeldenummer: PCT/EP2019/071230
(87) Internationale Veröffentlichungsnummer: WO 2020/052868

(56) Entgegenhaltungen:
- CN-U- 207 212 534
- JP-A- 2006 043 561
- JP-A- 2014 231 667
- KR-B1- 101 320 293

## Beschreibung

### Technisches Gebiet

Die Erfindung betrifft eine Vorrichtung zur Entstaubung von Konvertergas, umfassend zumindest ein Gehäuse mit rundem Querschnitt (z.B. ein zylindrisches Gehäuse), in welchem ein oder mehrere, vom Konvertergas durchströmbare Filterelemente angeordnet sind, pro Gehäuse zumindest eine Zuleitung für Konvertergas in das Gehäuse, wobei die Zuleitung - bezogen auf den Betriebszustand des Gehäuses - unterhalb der Filterelemente derart in das Gehäuse mündet, dass sich im Gehäuse eine anfänglich großteils radiale Strömung ausbildet.

Unter Filterelementen versteht man hier mechanisch filternde Elemente, die von Gas durchströmt werden, wobei der sich der darin enthaltene Staub an den Filterelementen ablagert. Bei in der Regel mehreren Filterelementen pro Gehäuse liegen die unteren und die oberen Enden der Filterelemente in der Regel jeweils in einer horizontalen Ebene.

Die Zuleitung mündet so in das Gehäuse, dass die in das Gehäuse eintretende Strömung eine radiale, nämlich zur Längsachse bzw. Höhenrichtung des Gehäuses normale, Geschwindigkeitskomponente aufweist, die jedenfalls größer ist als die axiale Geschwindigkeitskomponente, die parallel zur Längsachse bzw. Höhenrichtung des Gehäuses verläuft. Meist ist die axiale Geschwindigkeitskomponente dabei vernachlässigbar. Vereinfacht gesagt tritt das Konvertergas daher bei konventionellen Anlagen meist im Wesentlichen in horizontaler Richtung in das Gehäuse ein.

Am oder nahe dem - bezogen auf den Betriebszustand des Gehäuses - oberen Ende des Gehäuses befindet sich in der Regel eine Ableitung für das entstaubte Konvertergas, welches am oder nahe dem oberen Ende der Filterelemente entnommen wird. Das Konvertergas strömt also nach dem Eintritt in axialer Richtung durch die Filterelemente im Gehäuse nach oben, die Hauptströmungsrichtung des Konvertergases im Gehäuse entspricht daher der Höhenrichtung des Gehäuses.

Das Gehäuse beginnt sich in der Regel unterhalb der Filterelemente - wieder bezogen auf den Betriebszustand des Gehäuses - trichterförmig zu verjüngen, in diesem Gehäusebereich wird der von den Filterelementen abgeschiedene Staub gesammelt und schließlich nach unten aus dem Gehäuse entfernt. Dabei mündet die Zuleitung für Konvertergas in der Regel oberhalb dieser Verjüngung.

Der runde, insbesondere kreisrunde, Querschnitt des Gehäuses erhöht die Druckfestigkeit des Gehäuses.

### Stand der Technik

Beim Frischen von Roheisen mit Sauerstoff werden die Begleitelemente des Roheisens durch den Sauerstoff oxidiert und vom Eisen getrennt. Während die Oxide des Si, Mn und P in Form von Schlacke aus dem Stahlbad entfernt werden, entweicht Kohlenstoff gasförmig als Kohlenstoffmonoxid CO aus dem Stahlbad. Der durch den Frischprozess entstehende Kohlenmonoxid-Anteil in dem sogenannten Konvertergas, welches aus dem das Stahlbad enthaltenden Konverter entweicht, verleiht dem Konvertergas einen großen Energieinhalt. Durch chemische Umwandlung in Kohlenstoffdioxid CO2 kann dieser Energieinhalt später gewonnen werden, beispielsweise durch Verbrennung des CO oder durch Reduktion von Metalloxiden mittels des CO. Dazu ist es bekannt, das Konvertergas zu sammeln und zu speichern. Dazu wird das Konvertergas einer Entstaubung unterzogen - beispielsweise einer Primärentstaubung mittels Elektrofiltern oder mittels Gewebefiltern - sowie einer Kühlung.

Der Entstaubungsvorgang der Primärentstaubung ist diskontinuierlich und die Betriebsweisen unterscheiden sich deutlich hinsichtlich der Gas- und Staubzusammensetzung. Bedingt durch den Prozess der unterdrückten Verbrennung im Konverter folgen auf Phasen, in denen metallische Eisenpartikel mit einem CO/N2 Gemisch zur Gasreinigung transportiert werden (z.B. in der Blasephase) auf Phasen, in denen vorwiegend Umgebungsluft in die Gasreinigung gefördert wird (z.B. beim Chargieren des Konverters, bei Blaseunterbrechung oder beim Abstich).

Bei der elektrostatischen Entstaubung mittels Elektrofiltern kann mit verhältnismäßigem Aufwand nur ein begrenzter Abscheidegrad von 20-30 mg/Nm³ Restgehalt an Staub erreicht werden. Mit filternden Abscheidern, wie mit Gewebefiltern, wird im Gegensatz dazu ein Reinheitsgrad von < 5 mg/Nm³ Staubgehalt im Reingas erreicht, wobei bei Prozessen mit Gasrückgewinnung nur die Emissionen während der Fackelphase kritisch sind, wo also das Gas nach der Verbrennung in einer Fackel in die Umgebung ausgestoßen wird.

Im Elektrofilter kommt es prozessbedingt immer wieder zu Verpuffungen und Explosionen, da sehr feiner frischer Eisenstaub mit Sauerstoff aus der Luft reagiert und eine stark exotherme Reaktion auslöst. Während der Explosionen im Elektrofilter steigen die gerichteten und diffusen Staubemissionen um ein Vielfaches an. Zusätzlich stellen die Sprühelektroden im Elektrofilter ein ständiges Zündpotential für Gasmischungen aus CO und O2 dar, was sich ebenfalls in Verpuffungen und Explosionen äußert.

Deshalb werden bei Konvertergas mechanisch filternde Abscheider bzw. Filterelemente, wie Gewebefilter, gegenüber Elektrofiltern bevorzugt. Mechanisch filternde Abscheider, genauer das Innere von deren Gehäuse, werden üblicherweise mit verschiedenen Leiteinrichtungen und Prallelementen ausgestattet, um eine gleichmäßige Strömungsverteilung an den Filterelementen zu erreichen und die Filterelemente vor Strähnen mit hoher Gas- und Partikelgeschwindigkeit zu schützen. Mit der Zeit können sich kritische Mengen an nicht vollständig oxidierten Eisenpartikeln im Gehäuse, insbesondere an Flächen mit mehr als 40° Neigung gegen die Vertikale, ansammeln, welche Eisenpartikel bei Kontakt mit Sauerstoff unkontrolliert reagieren können und handelsübliche textile Filtermedien eines Gewebefilters zerstören. Ein dauerhafter Betrieb mit herkömmlichen Gewebefiltern ist daher oft mit Störungen verbunden. Aus diesem Grund wurde auch bereits die Verwendung von Filterelementen aus keramischen Fasern oder metallischem Gewebe statt Gewebefiltern mit textilen Filtermedien vorgeschlagen, siehe etwa WO 2013/011089 A1.

Aber auch bei Filtern mit keramischen Filterelementen bleibt das Problem bestehen, dass es bei der Einströmung des Konvertergases in das Gehäuse zu Geschwindigkeitsspitzen kommen kann, was die Filterelemente schädigen kann. Zusätzlich können solche Geschwindigkeitsspitzen zu Verwirbelungen in einem trichterförmigen Bereich des Gehäuses unterhalb der Einströmöffnung führen, wodurch der bereits abgeschiedene und dort abgelagerte Staub nochmals aufgewirbelt wird, und dieser zuvor abgeschiedene Staub erneut durch die Filterelemente abgeschieden werden muss bzw. diese durch Abrasion die Filterelemente zusätzlich belastet und die Standzeit der Filter verkürzen kann. Relevant Dokumente sind KR 101 320 293 B1, JP 2006 043561 A, JP 2014 231667 A und CN 207 212 534 U.

### Aufgabe der Erfindung

Es ist daher eine Aufgabe der vorliegenden Erfindung die Nachteile des Stands der Technik zu überwinden und eine Vorrichtung zur Entstaubung von Konvertergas vorzuschlagen, mittels welcher Geschwindigkeitsspitzen beim Einströmen des Konvertergases in das Gehäuse mit den Filterelementen verringert werden können, ohne jedoch dabei (zusätzliche) Flächen zur Ablagerung von Staub zu schaffen.

### Darstellung der Erfindung

Diese Aufgabe wird erfindungsgemäß gelöst durch eine Vorrichtung zur Entstaubung von Konvertergas gemäß Anspruch 1, umfassend zumindest ein Gehäuse mit rundem Querschnitt, in welchem ein oder mehrere, vom Konvertergas durchströmbare Filterelemente angeordnet sind, pro Gehäuse zumindest eine Zuleitung für Konvertergas in das Gehäuse, wobei die Zuleitung - bezogen auf den Betriebszustand des Gehäuses - unterhalb der Filterelemente derart in das Gehäuse mündet, dass sich im Gehäuse eine anfänglich großteils radiale Strömung ausbildet. Dabei ist vorgesehen, dass die Zuleitung am Gehäuse endet und dort eine längliche Einströmöffnung bildet, welche in Umfangsrichtung des Gehäuses eine größere Abmessung aufweist als in Höhenrichtung des Gehäuses, wobei das Innere des Gehäuses zwischen Einströmöffnung und Filterelementen frei von strömungsleitenden Einbauten ist.

Die längliche Einströmöffnung verteilt das Konvertergas besser über den Querschnitt des Gehäuses als dies eine kreisrunde Einströmöffnung gemäß dem Stand der Technik tut. Damit können die lokalen Maximalgeschwindigkeiten des Konvertergases verringert werden und es kann auf strömungsleitende Einbauten, wie Prallbleche, verzichtet werden, auf welchen sich sonst wieder Staub ablagern könnte.

Eine konstruktiv einfache Ausführungsvariante der Erfindung besteht darin, dass die Einströmöffnung als Langloch ausgebildet ist. Ein Langloch bezeichnet eine längliche Öffnung, wobei deren Längsseiten parallel zueinander verlaufen und seine schmalen Seiten durch Halbkreise abgeschlossen werden, deren Durchmesser der Breite bzw. Höhe des Langlochs entsprechen.

Eine Ausführungsform der Erfindung besteht darin, dass das Verhältnis der Fläche der Einströmöffnung zur Querschnittsfläche des Gehäuses auf Höhe der Einströmöffnung 1:15 bis 1:35, bevorzugt 1:25 bis 1:30 beträgt. Mit einer derart großen Einströmöffnung kann eine gute Verteilung des Konvertergases über den Querschnitt des Gehäuses erreicht werden.

Eine Ausführungsform der Erfindung sieht vor, dass das Verhältnis von Länge (in Umfangsrichtung des Gehäuses gemessen) zu Höhe der Einströmöffnung (in Höhenrichtung des Gehäuses gemessen) im Bereich von 1,3 bis 2,0, insbesondere von 1,4 bis 1,7 liegt. Die Höhenrichtung bzw. Längsachse des Gehäuses verläuft im Betriebszustand des Gehäuses senkrecht.

Eine Ausführungsform der Erfindung sieht vor, dass das Verhältnis der Länge der Einströmöffnung in Umfangsrichtung des Gehäuses zum Umfang des Gehäuses im Bereich von 0,1 bis 0,2 liegt, insbesondere von 0,1 bis 0,15.

Eine Ausführungsform der Erfindung sieht vor, dass die Zuleitung anschließend an das Gehäuse einen länglichen Querschnitt aufweist, welcher der Einströmöffnung entspricht, wobei sich dieser Querschnitt mit abnehmendem Abstand zur Einströmöffnung aufweitet. Dieser Abschnitt der Zuleitung wirkt wie ein Diffusor, der die Geschwindigkeit des Konvertergases bereits vor dem Eintritt in das Gehäuse stetig verringert. Die Aufweitung kann linear verlaufen, die Zuleitung kann also in diesem Abschnitt Wände aufweisen, die im Längsschnitt gerade verlaufen.

Eine Ausführungsform der Erfindung sieht vor, dass das Ausmaß der Aufweitung zwischen 5° und 20° liegt, vorzugsweise zwischen 10° und 15°. Dies bedeutet, dass bei Betrachtung eines beliebigen Längsschnitts durch die Zuleitung der Winkel zwischen der sich aufweitenden Wand (bei gekrümmter Wand zwischen deren Tangente) und der gedachten Fortsetzung der - stromaufwärts von der sich aufweitenden Wand liegenden - Zuleitung mit konstantem Querschnitt eben zwischen 5° und 20° liegt, vorzugsweise zwischen 10° und 15°. Dieser Winkel stellt in der Regel sicher, dass er einerseits möglichst groß ist und damit der sich zur Einströmöffnung hin aufweitende Abschnitt möglichst kurz ist, um die Einbaulänge der Zuleitung gering zu halten, aber andererseits ausreichend klein ist, um ein Ablösen der Strömung von der Zuleitung möglichst zu verhindern.

Eine Ausführungsform der Erfindung sieht vor, dass die Zuleitung unmittelbar außerhalb des Gehäuses gegenüber der Höhenrichtung des Gehäuses geneigt ausgeführt ist, sodass im Konvertergas enthaltener Staub im Betriebszustand des Gehäuses längs der Zuleitung durch die Einströmöffnung in das Innere des Gehäuses gleiten kann. Das heißt, dass zumindest der untere Teil der Zuleitung geneigt ausgeführt sein muss. Im Falle des sich vor der Einströmöffnung in Strömungsrichtung des Konvertergases erweiternden Abschnitts der Zuleitung muss zumindest der untere Teil nach unten geneigt ausgeführt sein, der obere Teil dieses Abschnitts könnte grundsätzlich auch gerade oder zur Einströmöffnung hin ansteigend ausgebildet sein.

Bezüglich Neigung der Zuleitung kann vorgesehen sein, dass die Zuleitung unmittelbar außerhalb des Gehäuses gegenüber der Horizontalen (= normal zur Höhenrichtung des Gehäuses im Betriebszustand) zwischen 0° und 30°, bevorzugt zwischen 5° und 15°, geneigt ausgeführt ist.

Die Neigung der Zuleitung nach unten, zur Einströmöffnung hin, bewirkt auch, dass das Konvertergas nicht waagrecht, sondern eben um einige Grad (eben bis zu 30°, insbesondere um 5° bis 15°) von der Horizontalen abweichend nach unten in das Gehäuse einströmt. Dies bewirkt wiederum, dass weniger Staub in der Zuleitung abgelagert wird und dass das Konvertergas nicht direkt auf die Filterelemente treffen kann, die ja erst oberhalb der Einströmöffnung angeordnet sind. Dabei ist zu berücksichtigen, dass sich der Gasstrom nach dem Eintritt in das Gehäuse um einige Grad gegenüber der gedachten Verlängerung der Oberseite der Zuleitung, erfahrungsgemäß ca. 9°, aufweitet. Durch die Neigung wird die direkte Anströmung der Filterelemente trotz geringem Abstand zwischen Einströmöffnung und der Unterkante der Filterelemente verhindert.

Vorzugsweise ist das Gehäuse aus Beton oder Stahl gefertigt, und weist in diesem Fall die notwendige Druck- und Temperaturfestigkeit auf. So könnte das Gehäuse etwa aus Fertigbeton-Ringen aufgebaut werden.

Zusätzlich oder alternativ dazu kann vorgesehen sein, dass das Gehäuse innen feuerfest ausgekleidet oder aus feuerfestem Material gefertigt ist. Dabei kann das Gehäuse ganz oder teilweise innen feuerfest ausgekleidet oder aus feuerfestem Material gefertigt sein. Das Gehäuse könnte z.B. aus Stahl gefertigt sein und ganz oder z.B. nur im Bereich der Einströmöffnung mit feuerfestem Material ausgekleidet sein. Als feuerfestes Material kommen z.B. eine feuerfeste Ausmauerung oder ein Feuerfestbeton in Frage. Insofern könnte das Gehäuse, zumindest teilweise, aus Feuerfestbeton gefertigt sein.

Neben der Verwendung von herkömmlichen Gewebefiltern mit textilen Filtermedien als Filterelemente können vorteilhafter Weise keramische Filterelemente und/oder Filterelemente aus metallischem Gewebe verwendet werden, weil diese widerstandsfähiger gegen höhere Temperaturen sind. Die keramischen Filterelemente können z.B. aus Keramikfasern bestehen.

Eine Ausführungsvariante sieht vor, dass das Gehäuse mit einer Kühlung ausgestattet ist. Hiermit ist eine indirekte Kühlung gemeint und nicht das Eindüsen von Flüssigkeit (was aber grundsätzlich auch nicht ausgeschlossen ist). Z.B. können mit Kühlmittel, wie Wasser, durchströmte Rohre in der Wand des Gehäuses vorgesehen werden. Damit kann die Temperatur im Inneren des Gehäuses gesenkt werden, wodurch die Gefahr von Bränden im Gehäuse reduziert wird.

Zusätzlich zur bisher beschriebenen Vorrichtung zur Entstaubung können eine weitere Vorrichtung zur Entstaubung vorgesehen sein, welche gasseitig von der Vorrichtung zur Entstaubung getrennt ist, und eine Schalteinrichtung, welche ausgebildet ist, das Konvertergas entweder der Vorrichtung zur Entstaubung oder der weiteren Vorrichtung zur Entstaubung zuzuleiten.

Die Schalteinrichtung kann beispielsweise eine Absperrklappe vor der Vorrichtung zur Entstaubung und eine weitere Absperrklappe vor der weiteren Vorrichtung zur Entstaubung umfassen. Die Schalteinrichtung kann weiters eine Absperrklappe nach der Vorrichtung zur Entstaubung und eine weitere Absperrklappe nach der weiteren Vorrichtung zur Entstaubung umfassen.

Zur bisher beschriebenen erfindungsgemäßen Vorrichtung zur Entstaubung kann somit eine weitere Vorrichtung zur Entstaubung parallel geschaltet werden, wobei das Konvertergas entweder durch die erfindungsgemäße Vorrichtung oder durch die weitere Vorrichtung geleitet werden kann. Die weitere Vorrichtung zur Entstaubung kann entweder ebenso erfindungsgemäß ausgebildet sein, oder sie kann anders, insbesondere nach dem Stand der Technik ausgebildet sein, z.B. als Elektrofilter. Auch die weitere Vorrichtung zur Entstaubung kann aus mehreren Gehäusen mit darin angeordneten Filterelementen bestehen. Die beiden Vorrichtungen sind gasseitig voneinander getrennt, das heißt, dass Konvertergas (sowohl Rohgas als auch Reingas) aus der Vorrichtung nicht in die weitere Vorrichtung gelangen kann, und umgekehrt.

Es werden somit zwei räumlich getrennte und voneinander absperrbare Filtermodule bereitgestellt, wobei ein Filtermodul (= die erfindungsgemäße Vorrichtung zur Entstaubung) für das Konvertergas aus der Blasephase reserviert ist, das andere Filtermodul (= die weitere Vorrichtung zur Entstaubung) für den Betrieb außerhalb der Blasephasen. Dabei ist die erfindungsgemäße Vorrichtung zur Entstaubung bevorzugt mit keramischen Filterelementen und/oder Filterelementen aus metallischem Gewebe ausgestattet.

Der Vorteil der räumlichen Trennung ist, dass der übermäßige Kontakt von Umgebungsluft mit feinen Eisenpartikeln weitestgehend unterbunden werden kann. Die Umschaltung zwischen Vorrichtung und weiterer Vorrichtung erfolgt synchronisiert, damit Druckspitzen im Prozess verhindert werden können und der Konverterbetrieb möglichst nicht beeinflusst wird. Es wird also die Zufuhr von Konvertergas zur Vorrichtung zur Entstaubung erst gestoppt, z.B. durch Schließen einer Absperrklappe, bis die Zufuhr von Konvertergas zur weiteren Vorrichtung begonnen hat, und umgekehrt. Es wird bei der Abschaltung der Vorrichtung bzw. der weiteren Vorrichtung auch vorzugsweise eine Absperrklappe geschlossen, die nach der Vorrichtung bzw. der weiteren Vorrichtung angeordnet ist, um die gerade nicht in Betrieb befindliche Vorrichtung vor dem Eintritt von Falschgas aus der weiteren Vorrichtung zu schützen, und umgekehrt.

Es werden also bevorzugt jeweils roh- und reingasseitige Absperrklappen vorgesehen, die einen Eintritt von Falschluft während der anderen Konverterphasen verhindern, welcher Eintritt zu einer Oxidation des Eisenstaubes führen könnte.

Ein vorzugsweiser kontinuierlicher Staubaustrag aus der Vorrichtung zur Entstaubung und/oder aus der weiteren Vorrichtung zur Entstaubung verhindert, dass sich darin größere Staubablagerungen bilden können. Der Staubaustrag erfolgt vorzugsweise getrennt, es gibt dann für die Vorrichtung zur Entstaubung eine eigene Einrichtung zum Staubaustrag und für die weitere Vorrichtung zur Entstaubung eine eigene Einrichtung zum Staubaustrag, sodass sich die unterschiedlichen Stäube nicht mischen.

Im Falle der weiteren Vorrichtung zur Entstaubung kann eine Steuereinrichtung vorgesehen sein, welche ausgebildet ist, die Schalteinrichtung in Abhängigkeit des Sauerstoffgehalts des Konvertergases vor den Vorrichtungen zur Entstaubung entweder der Vorrichtung oder der weiteren Vorrichtung zur Entstaubung zuzuleiten. Da der Sauerstoffgehalt des Konvertergases von der Betriebsphase des Konverters abhängt, kann auf diese Weise sichergestellt werden, dass Konvertergas aus der Blasephase in die Vorrichtung zur Entstaubung gelangt, während Konvertergas außerhalb der Blasephase in die weitere, nicht zwingend erfindungsgemäß ausgeführte, Vorrichtung zur Entstaubung gelangt.

In der Rohgasleitung zwischen Kühlkamin und den Vorrichtungen zur Entstaubung ist dazu beispielsweise eine Einrichtung zur Gasanalyse vorgesehen, welche die Umschalteschwellen für die Schalteinrichtungen vorgibt. Die Gasanalyse am oder nach dem Kühlkamin erlaubt eine rasche und zuverlässige Bestimmung der Gaszusammensetzung. Die Steuereinrichtung für die Umschaltung berücksichtigt die Analysedauer, also die Zeit für Probenahme und Analyse, sowie die Totzeit für den Gasstrom zwischen Kühlkamin und Eintritt in die beiden Vorrichtungen zur Entstaubung.

Die Erfindung umfasst auch die Verwendung der erfindungsgemäßen Vorrichtung zur Entstaubung von Konvertergas.

Wenn nur eine erfindungsgemäße Vorrichtung zur Entstaubung vorhanden ist, kann vorgesehen sein, dass die Regenerierung der Filterelemente gegen Ende einer Blasephase im Konverter, bei einem Blasefortschritt von größer 90%, durchgeführt wird. Zu diesem Zeitpunkt gelangt noch kaum Sauerstoff als Reaktionspartner in das Konvertergas und damit in die Gehäuse, der Staub kann somit im Gehäuse noch keine exotherme Oxidationsreaktion eingehen, wodurch die Gefahr von Bränden im Gehäuse reduziert werden kann, wenn der Staub rechtzeitig aus dem Gehäuse entfernt werden kann. Zu diesem Zeitpunkt ist die im Konverterprozess erzeugte Gasmenge bereits im Absinken, sodass sich die Abreinigung der Filterelemente effizienter gestaltet. Das Regenerieren erfolgt z.B. mittels kurzer gerichteter Gasimpulse, z.B. N2, aus eigenen Gasdüsen, die an den Filterelementen ausgerichtet sind. Der Effekt wird durch das Ansaugen von umgebendem Gas durch den gerichteten Gasimpuls gegen die Hauptströmungsrichtung verstärkt.

Falls eine erfindungsgemäße Vorrichtung zur Entstaubung und zusätzlich eine weitere Vorrichtung zur Entstaubung vorhanden sind, kann vorgesehen sein, dass das Konvertergas durch die Schalteinrichtung der Vorrichtung zur Entstaubung zugeleitet wird, wenn der Sauerstoffgehalt des Konvertergases vor den (beiden) Vorrichtungen zur Entstaubung einen vorgegebenen Schwellwert unterschreitet, insbesondere < 5 Vol%, bevorzugt < 2 Vol% ist, und der weiteren Vorrichtung zur Entstaubung, wenn der Sauerstoffgehalt des Konvertergases vor den (beiden) Vorrichtungen zur Entstaubung den vorgegebenen Schwellwert überschreitet, insbesondere > 5 Vol%, bevorzugt > 2 Vol% ist.

In diesem Fall ist es möglich und vorteilhaft, dass die Filterelemente immer dann regeneriert werden, wenn die jeweilige Vorrichtung zur Entstaubung nicht von Konvertergas durchströmt wird.

Die Steuerung von komplexen Anlagen, wie Konverteranlagen, erfolgt in der Regel computerunterstützt. Für den Fall, dass sowohl eine erfindungsgemäße Vorrichtung als auch eine weitere Vorrichtung zur Entstaubung vorhanden sind, umfasst die Erfindung auch ein Computerprogrammprodukt, welches ein Programm umfasst und direkt in einen Speicher einer Steuereinrichtung für eine Schalteinrichtung ladbar ist, mit Programm-Mitteln, um die Schalteinrichtung wie folgt zu steuern, wenn das Programm von der Steuereinrichtung ausgeführt wird: dass das Konvertergas durch die Schalteinrichtung der Vorrichtung zur Entstaubung zugeleitet wird, wenn der Sauerstoffgehalt des Konvertergases vor den Vorrichtungen zur Entstaubung einen vorgegebenen Schwellwert unterschreitet, insbesondere < 5 Vol%, bevorzugt < 2 Vol% ist, und der weiteren Vorrichtung zur Entstaubung, wenn der Sauerstoffgehalt des Konvertergases vor den Vorrichtungen zur Entstaubung den vorgegebenen Schwellwert überschreitet, insbesondere > 5 Vol%, bevorzugt > 2 Vol% ist.

Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor einer Steuereinrichtung für eine Schalteinrichtung geladen werden kann.

Die erfindungsgemäße Vorrichtung ersetzt herkömmliche Elektrofilter und kann damit die Explosionsgefahr verringern. Durch die höhere Filterleistung von Filterelementen gegenüber Elektrofiltern kann auch in Betriebsphasen, wo keine Gasrückgewinnung durchgeführt wird, das gereinigte Konvertergas also an einer Fackel verbrannt wird, die Staubbelastung der Umwelt reduziert werden. Die Abscheideleistung mit der erfindungsgemäßen Vorrichtung ist auch in trockenen Gasen sichergestellt, es muss kein Verdampfungskühler vor der Vorrichtung zur Entstaubung vorgesehen werden. Die geringen Staubgehalte im gereinigten Konvertergas reduzieren auch den Verschleiß in folgenden Anlagen, z.B. in einem Kraftwerk oder im Winderhitzer eines Hochofens oder in einer Kokerei, sowie die Wartungsintensität im Gasspeicher.

Das entstaubte Konvertergas kann in einem Gasspeicher gespeichert werden. Der Gaskühler, der dem Gasspeicher vorgeschaltet ist, kann aufgrund der gegenüber einem Elektrofilter geringeren Staubbelastung kompakter gebaut werden, und es muss deutlich weniger verunreinigtes Abwasser aus dem Gaskühler ausgeschleust werden. Eine zusätzliche Reinigungsstufe mit Nasselektrofiltern zwischen Gasspeicher und Verbrauchern ist nicht erforderlich.

### Kurzbeschreibung der Figuren

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Ansicht einer Anlage zur Behandlung von Konvertergas gemäß dem Stand der Techik,
- Fig. 2: eine Untersicht einer erfindungsgemäßen Vorrichtung zur Entstaubung,
- Fig. 3: eine Seitenansicht einer erfindungsgemäßen Vorrichtung zur Entstaubung im Bereich der Zuleitung,
- Fig. 4: eine perspektivische Ansicht einer erfindungsgemäßen Vorrichtung zur Entstaubung im Bereich der Zuleitung,
- Fig. 5: einen Längsschnitt durch eine erfindungsgemäße Vorrichtung,
- Fig. 6: eine weitere Ausführungsform einer erfindungsgemäßen Vorrichtung.

### Ausführung der Erfindung

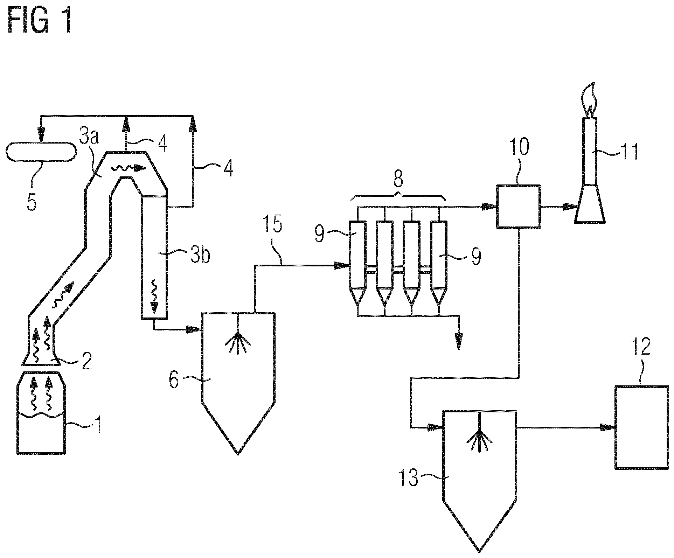

Figur 1 zeigt eine mögliche Anlage zur Behandlung von Konvertergas und soll den grundsätzlichen Ablauf illustrieren. Die erfindungsgemäße Vorrichtung wird an Stelle der in Fig. 1 dargestellten Vorrichtung 8 zur Entstaubung eingebaut.

In Figur 1 steigt aus einem Konverter 1 Konvertergas, dargestellt durch gewellte Pfeile, in eine Absaughaube 2 auf. Durch die Absaughaube wird das Konvertergas in den Kühlkamin, der eine erste Kühlvorrichtung zur indirekten Kühlung ist, im dargestellten Fall unter Dampferzeugung, geleitet. Der Kühlkamin umfasst die Kühlkaminteile 3a und 3b. Über Rohrleitungen 4 wird Dampf, der durch Wärmeaustausch zwischen dem Konvertergas und dem in - nicht dargestellten Rohren im Kühlkamin geführten - Kühlmedium Wasser entsteht, zu einer Dampftrommel 5 geführt. Im Kühlkamin findet ein erster Kühlschritt für das Konvertergas mittels indirekter Kühlung durch Wasser/Dampf statt. Am Ende des Kühlkaminteiles 3a hat das Konvertergas eine Temperatur von circa 900°C und wird im Kühlkaminteil 3b auf eine Temperatur von etwa 400°C weiter abgekühlt.

Nach Austritt des Konvertergases aus der ersten Kühlvorrichtung tritt es in eine zweite Kühlvorrichtung 6 ein; es wäre denkbar, dass dazwischen eine weitere Vorrichtung zur Behandlung des Konvertergases vorhanden ist, wie beispielsweise eine Grobentstaubungsvorrichtung. Die Kühlvorrichtung 6 ist eine Kühlvorrichtung mittels Wassereindüsung. Das Konvertergas ist nach Austritt aus der Kühlvorrichtung 6 nicht gesättigt.

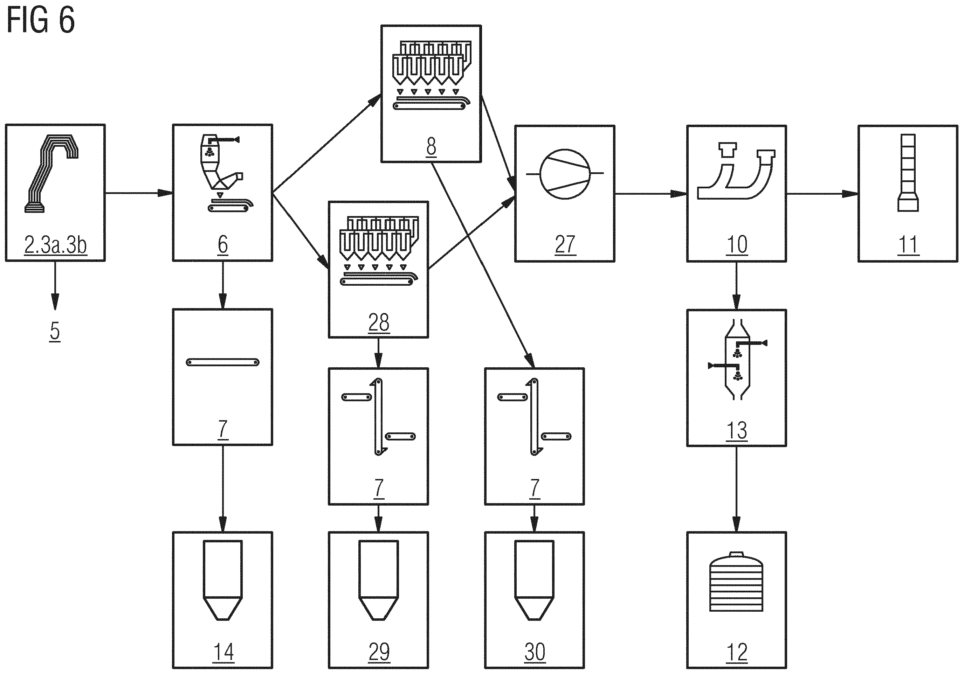

Das aus der zweiten Kühlvorrichtung 6 austretende Konvertergas wird anschließend in eine Vorrichtung 8 zur Entstaubung geleitet, in welcher es mittels Gewebefiltern, die jeweils in Gehäusen 9 angeordnet sind, auf einen Staubgehalt von < 5 mg/Nm³ entstaubt wird. Anschließend wird das gekühlte und entstaubte Konvertergas aus der Vorrichtung 8 ausgeleitet. Über eine Umschaltstation 10 kann das gekühlte und entstaubte Konvertergas zu einem Fackelkamin 11 geleitet werden, wo es verbrannt wird. Es kann alternativ dazu zu einem Gasspeicher 12 geleitet werden. Zwischen Vorrichtung 8 und Umschaltstation 10 ist in der Regel ein Saugzugebläse 27 (siehe Fig. 6) vorgesehen, um das Konvertergas in die Umschaltstation 10 zu fördern.

Beispielsweise wird das Konvertergas dann zum Fackelkamin 11 geführt, wenn seine CO-Konzentration unterhalb eines für eine wirtschaftlich sinnvolle weitere Nutzung notwendigen Schwellenwertes liegt. Das kann der Fall sein während Zeitabschnitten wie beispielsweise Blasebeginn oder Blaseende, oder Abstichperioden am Konverter 1. Bei Anstieg der CO-Konzentration über den Schwellenwert wird das Konvertergas durch Umschaltung der Umschaltstation 10 dem Gasspeicher 12 zugeführt.

In Strömungsrichtung des Konvertergases vor dem Gasspeicher 12 wird das gekühlte und entstaubte Konvertergas hier in einer dritten Kühlvorrichtung 13 erneut einer Kühlung mit Wassereindüsung unterworfen. Das Konvertergas ist nach Austritt aus der Kühlvorrichtung 13 gesättigt.

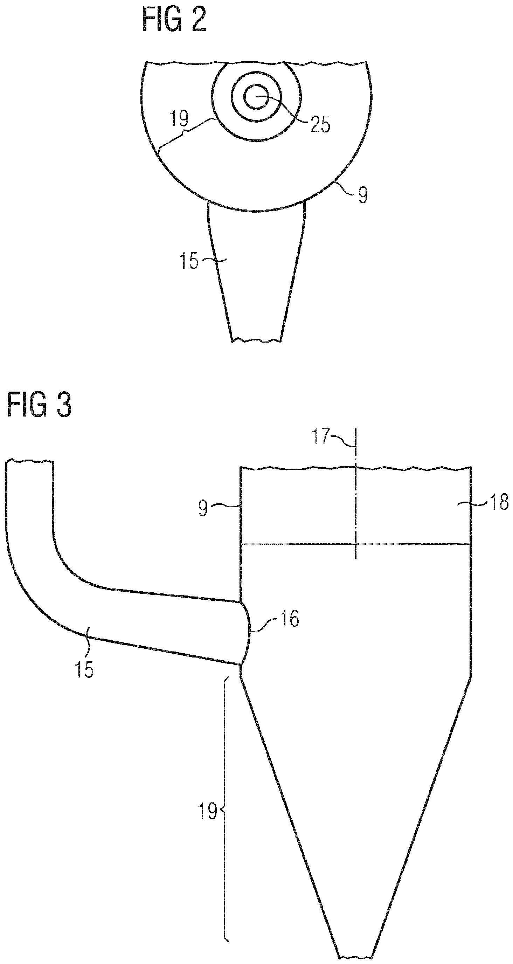

Fig. 2 zeigt eine Untersicht einer erfindungsgemäßen Vorrichtung 8 zur Entstaubung, und zwar eines Gehäuses 9 mit Zuleitung 15. Es ist der trichterförmiger Bereich 19 des Gehäuses 9 zu erkennen, der mittig eine Auslassöffnung 25 hat, um abgeschiedenen Staub entnehmen zu können. Die Auslassöffnung 25 ist hier verschlossen dargestellt.

Der Durchmesser des Gehäuses im zylindrischen Teil liegt typischer Weise bei einigen Metern, z.B. zwischen 3 und 7 m.

Fig. 3 zeigt eine Seitenansicht einer erfindungsgemäßen Vorrichtung 8 zur Entstaubung im Bereich der Zuleitung 15. Die Zuleitung 15 mündet im zylindrischen Teil des Gehäuses 9 in das Gehäuse, unterhalb der hier nur als ein einziger Block dargestellten Filterelemente 18. Der trichterförmige Bereich 19 des Gehäuses 9 beginnt, bezüglich der Höhenrichtung 17 des Gehäuses 9, unterhalb der Mündung der Zuleitung 15, also unterhalb der Einströmöffnung 16. Die Zuleitung 15 schwenkt hier, in Strömungsrichtung des Konvertergases gesehen, aus der Senkrechten, wo die Zuleitung einen kreisförmigen Querschnitt aufweist, nach einer Biegung 26 in eine Position, die ein wenig unter die Waagrechte geneigt ist, und erweitert sich im diesem Bereich zur Einströmöffnung 16 hin.

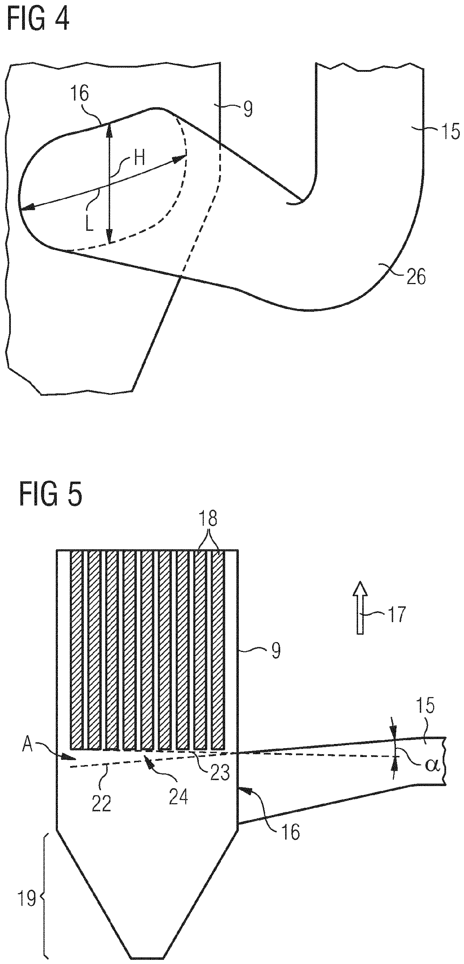

Fig. 4 zeigt eine perspektivische Ansicht einer erfindungsgemäßen Vorrichtung 8 zur Entstaubung im Bereich der Zuleitung 15. Es ist gut zu erkennen, dass sich die Zuleitung 15 nach der Biegung 26 von einem kreisrunden Querschnitt zu einem länglichen Querschnitt aufweitet, sodass die Einströmöffnung 16 ebenfalls einen länglichen Querschnitt aufweist, deren Länge L in Umfangsrichtung des Gehäuses 9 größer ist als deren Höhe H, gemessen in Höhenrichtung 17 des Gehäuses 9. Das Verhältnis von Länge L zu Höhe H der Einströmöffnung 16 liegt in diesem Beispiel bei etwa 1,5. Das Verhältnis der Länge L der Einströmöffnung in Umfangsrichtung des Gehäuses 9 zum Umfang des Gehäuses 9 liegt in diesem Beispiel bei etwa 0,15.

In Fig. 5, die einen Längsschnitt durch eine erfindungsgemäße Vorrichtung zeigt, ist die Ausführung der Zuleitung 15 vor der Einströmöffnung 16 in das Gehäuse 9 gut zu erkennen. Sowohl die Oberseite als auch die Unterseite der Zuleitung 15 sind leicht nach unten geneigt, die Unterseite aufgrund der Aufweitung des Querschnitts stärker als die Oberseite. Die Zuleitung 15 endet am Gehäuse 9, es kommt daher im Gehäuse 9 zu einer Aufweitung 25 der Gasströmung, die um einige Grad (z.B. um etwa 9°) von der gedachten Fortsetzung 22 der Oberseite (z.B. Oberkante) der Zuleitung 15 nach oben abweicht, siehe Aufweitungswinkel 24. Durch die leichte Neigung der Zuleitung 15 nach unten, sowie durch die Anordnung der Einströmöffnung 16 in Höhenrichtung 17 relativ zu den Filterelementen 18, bleibt diese Aufweitung 25 unterhalb der Filterelemente 18, sodass diese nicht einem direkten Aufprall der in das Gehäuse 9 eintretenden Staubpartikel ausgesetzt sind.

Der in Höhenrichtung 17 gemessene Abstand zwischen gedachter Fortsetzung 22 und unterem Ende des am weitesten von der Einströmöffnung 16 entfernten Filterelements 18 ist in Fig. 7 mit A bezeichnet. Dieser Abstand A sollte so groß sein, dass die Aufweitung 23 das untere Ende des Filterelements 18 nicht erreicht, mit anderen Worten, sollte die Strömung nicht direkt auf die Filter gerichtet werden. Das Minimum dieses Abstands A kann festgelegt werden durch den tan α * Durchmesser des Gehäuses 9, wobei α der Neigungswinkel der Oberkante der Zuleitung 15 gegen die Horizontale ist (Höhenrichtung 17 ist normal zur Horizontalen). Für α ist ein Wert zwischen 5° und 30° bevorzugt zwischen 9° und 15 ° zu wählen. Dies bedeutet, dass der Abstand A zwischen 8 - 58%, bevorzugt 15 - 27%, des Durchmessers des Gehäuses auf dieser Höhe beträgt.

In Fig. 5 sind keine strömungsleitenden Einbauten, wie Prallbleche, unterhalb der Filterelemente 18 vorgesehen.

Fig. 6 zeigt eine weitere mögliche Anlage zur Behandlung von Konvertergas in vereinfachter schematischer Darstellung. Die Anlage entspricht im Wesentlichen der in Fig. 1 gezeigten Anlage. Das Konvertergas gelangt durch die Absaughaube 2 in den Kühlkamin, als erste Kühlvorrichtung, mit den Kühlkaminteilen 3a und 3b. Dampf, der durch Wärmeaustausch zwischen dem Konvertergas und dem Kühlmedium Wasser entsteht, wird zu einer Dampftrommel 5 geführt.

Nach Austritt des Konvertergases aus dem Kühlkamin tritt es in die zweite Kühlvorrichtung 6 mit Wassereindüsung ein und verlässt diese ungesättigt. Abgeschiedener Staub wird über einen eigenen Staubförderer 7, welcher der Kühlvorrichtung 6 zugeordnet ist, in einen Staubsilo 14 verbracht.

Das aus der zweiten Kühlvorrichtung 6 austretende Konvertergas wird anschließend je nach Betriebsphase des Konverters entweder in die Vorrichtung 8 zur Entstaubung oder in die weitere Vorrichtung 28 zur Entstaubung geleitet. Zumindest eine der beiden Vorrichtungen 8, 28 ist erfindungsgemäß ausgebildet. Die zweite Vorrichtung 28 kann auch ein Elektrofilter nach dem Stand der Technik sein. Vorrichtung 8 und Vorrichtung 28 sind räumlich voneinander getrennt und gasseitig gegenseitig absperrbar. Die Vorrichtung 8 ist für die Blasephase des Konverters 1 reserviert, die weitere Vorrichtung 28 ist für den Betrieb außerhalb der Blasephasen des Konverters 1 vorgesehen. Der Vorteil dieser räumlichen Trennung ist, dass der übermäßige Kontakt von Umgebungsluft mit feinen Eisenpartikeln weitestgehend unterbunden werden kann.

Die Umschaltung zwischen den Vorrichtungen 8, 28 erfolgt synchronisiert, damit Druckspitzen im Prozess verhindert werden können und der Konverterbetrieb möglichst nicht beeinflusst wird. In der Rohgasleitung zwischen Kühlkamin 3a, 3b und den Vorrichtungen 8, 28 (jedenfalls in Strömungsrichtung vor den Vorrichtungen 8, 28) ist eine Einrichtung zur Gasanalyse vorgesehen, welche die Umschalteschwellen für die Vorrichtungen 8, 28 vorgibt. Eine nicht dargestellte Einrichtung zur Gasanalyse am oder nach dem Kühlkamin 3a, 3b erlaubt eine rasche und zuverlässige Bestimmung der Gaszusammensetzung. Die Steuerung für die Umschaltung, realisiert z.B. durch eine hier nicht dargestellte Steuereinrichtung in der Anlage oder als Teil einer übergeordneten Prozesssteuerung, berücksichtigt die Analysedauer (Probenahme & Analyse) sowie die Totzeit für den Gasstrom zwischen Kühlkamin 3a, 3b und Eintritt in die Vorrichtungen 8, 28.

Die Filterelemente der Vorrichtung 8 für den Blaseprozess werden nach dem Ende der Blasephase abgereinigt und mit Stickstoff gespült. Roh- und reingasseitige Absperrklappen für die Vorrichtung 8 verhindern einen Eintritt von Falschluft während der anderen Betriebsphasen des Konverters, die zu einer Oxidation des Eisenstaubes führen könnte. Ein kontinuierlicher Staubaustrag aus den Vorrichtungen 8, 28 verhindert, dass sich größere Staubablagerungen in den Filtertrichtern (also den trichterförmigen Bereichen der Gehäuse 9) bilden können.

Die Vorrichtung 28 für die "Nicht-Blasephasen" kann wegen der geringeren Staubbeladung des Gasstromes mit höherer Filterflächenbelastung ausgelegt werden, sodass die zusätzliche verbaute Fläche nicht übermäßig ansteigt.

Die Filterabreinigung (Regenerierung) der Filterelemente 18 der beiden Vorrichtungen 8, 28 erfolgt wiederum nach dem Ende einer jeden Betriebsphase im strömungslosen Zustand.

Stäube können für jede Vorrichtung 8, 28 individuell mit jeweils zumindest einem Staubförderer 7 ausgetragen werden. Dementsprechend können sie getrennt in eigenen Staubsilos 29, 30 gesammelt und weiterverarbeitet werden.

Als Schwellenwerte für das Umschalten zwischen den beiden Vorrichtungen 8, 28 können folgende Bedingungen definiert werden:
Messtechnische Analyse der Abgaszusammensetzung als Umschaltwerte zwischen den beiden Vorrichtungen 8, 28:
- Sauerstoffkonzentration: < 5 Vol%, bevorzugt < 2 Vol%, für Umschalten auf die Vorrichtung 8 (auf deren einzelne Filtermodule, hier Gehäuse 9) für die Blasephase,
- Sauerstoffkonzentration: > 5 Vol%, bevorzugt > 2 Vol%, für Umschalten auf die weitere Vorrichtung 28 (auf deren einzelne Filtermodule) für die Nicht-Blasephase.

In den Vorrichtungen 8, 28 zur Entstaubung wird das Konvertergas bis auf einen Staubgehalt von < 5 mg/Nm³ entstaubt. Anschließend wird das gekühlte und entstaubte Konvertergas über eine Umschaltstation 10 entweder zu einem Fackelkamin 11 geleitet, wo es verbrannt wird, oder alternativ zu einem Gasspeicher 12. Zwischen den Vorrichtungen 8, 28 und der Umschaltstation 10 ist ein Saugzugebläse 27 vorgesehen, um das Konvertergas in die Umschaltstation 10 zu fördern. In Strömungsrichtung des Konvertergases vor dem Gasspeicher 12 wird das gekühlte und entstaubte Konvertergas in einer dritten Kühlvorrichtung 13 erneut einer Kühlung mit Wassereindüsung unterworfen. Das Konvertergas ist nach Austritt aus der Kühlvorrichtung 13 gesättigt.

### Bezugszeichenliste:

- 1: Konverter
- 2: Absaughaube
- 3a,3b: Kühlkaminteile
- 4: Rohrleitung
- 5: Dampftrommel
- 6: zweite Kühlvorrichtung
- 7: Staubförderer
- 8: Vorrichtung zur Entstaubung
- 9: Gehäuse
- 10: Umschaltstation
- 11: Fackelkamin
- 12: Gasspeicher
- 13: Dritte Kühlvorrichtung
- 14: Staubsilo
- 15: Zuleitung
- 16: Einströmöffnung
- 17: Höhenrichtung des Gehäuses 9
- 18: Filterelemente
- 19: trichterförmiger Bereich des Gehäuses 9
- 20: Zuleitung mit kreisförmigem Querschnitt
- 21: Bereich größter Geschwindigkeit
- 22: gedachte Fortsetzung von Zuleitung 15
- 23: Aufweitung
- 24: Aufweitungswinkel
- 25: Auslassöffnung
- 26: Biegung
- 27: Saugzuggebläse
- 28: weitere Vorrichtung zur Entstaubung
- 29: Staubsilo
- 30: Staubsilo

- A: Abstand
- L: Länge der Einströmöffnung 16
- H: Höhe der Einströmöffnung 16
- α: Neigungswinkel der Oberkante der Zuleitung 15 gegen die Horizontale

## Patentansprüche

1. Vorrichtung (8) zur Entstaubung von Konvertergas, umfassend zumindest ein Gehäuse (9) mit rundem Querschnitt, in welchem ein oder mehrere, vom Konvertergas durchströmbare Filterelemente (18) angeordnet sind, pro Gehäuse zumindest eine Zuleitung (15) für Konvertergas in das Gehäuse, wobei die Zuleitung - bezogen auf den Betriebszustand des Gehäuses - unterhalb der Filterelemente (18) derart in das Gehäuse (9) mündet, dass sich im Gehäuse eine anfänglich großteils radiale Strömung ausbildet, **dadurch gekennzeichnet, dass** die Zuleitung (15) am Gehäuse (9) endet und dort eine längliche Einströmöffnung (16) bildet, welche in Umfangsrichtung des Gehäuses (9) eine größere Abmessung aufweist als in Höhenrichtung (17) des Gehäuses, wobei das Innere des Gehäuses (9) zwischen Einströmöffnung (16) und Filterelementen (18) frei von strömungsleitenden Einbauten ist.

2. Vorrichtung (8) nach Anspruch 1, **dadurch gekennzeichnet, dass** das Verhältnis der Fläche der Einströmöffnung (16) zur Querschnittsfläche des Gehäuses (9) auf Höhe der Einströmöffnung (16) 1:15 bis 1:35 bevorzugt 1:25 bis 1:30 beträgt.

3. Vorrichtung (8) nach einem der Ansprüche 1 bis 2, **dadurch gekennzeichnet, dass** das Verhältnis von Länge (L) zu Höhe (H) der Einströmöffnung (16) im Bereich von 1,3 bis 2,0, insbesondere von 1,4 bis 1,7 liegt.

4. Vorrichtung (8) nach einem der Ansprüche 1 bis 3, **dadurch gekennzeichnet, dass** das Verhältnis der Länge (L) der Einströmöffnung (16) im Umfangsrichtung des Gehäuses (9) zum Umfang des Gehäuses (9) im Bereich von 0,1 bis 0,2 liegt, insbesondere von 0,1 bis 0,15.

5. Vorrichtung (8) nach einem der Ansprüche 1 bis 4, **dadurch gekennzeichnet, dass** die Zuleitung (15) anschließend an das Gehäuse (9) einen länglichen Querschnitt aufweist, welcher der Einströmöffnung (16) entspricht, wobei sich dieser Querschnitt mit abnehmendem Abstand zur Einströmöffnung (16) aufweitet.

6. Vorrichtung (8) nach einem der Ansprüche 1 bis 5, **dadurch gekennzeichnet, dass** die Zuleitung (15) unmittelbar außerhalb des Gehäuses (9) gegenüber der Höhenrichtung (17) des Gehäuses (9) geneigt ausgeführt ist, sodass im Konvertergas enthaltener Staub im Betriebszustand des Gehäuses längs der Zuleitung (15) durch die Einströmöffnung (16) in das Innere des Gehäuses (9) gleiten kann.

7. Vorrichtung (8) nach einem der Ansprüche 1 bis 6, **dadurch gekennzeichnet, dass** die Filterelemente (18) keramische Filterelemente und/oder Filterelemente aus metallischem Gewebe sind.

8. Vorrichtung (8) nach einem der Ansprüche 1 bis 7, **dadurch gekennzeichnet, dass** das Gehäuse (9) mit einer Kühlung ausgestattet ist.

9. Vorrichtung (8) nach einem der Ansprüche 1 bis 8, **dadurch gekennzeichnet, dass** eine weitere Vorrichtung (28) zur Entstaubung vorgesehen ist, welche gasseitig von der Vorrichtung (8) zur Entstaubung getrennt ist, und eine Schalteinrichtung, welche ausgebildet ist, das Konvertergas entweder der Vorrichtung (8) zur Entstaubung oder der weiteren Vorrichtung (28) zur Entstaubung zuzuleiten.

10. Vorrichtung (8) nach Anspruch 9, **dadurch gekennzeichnet, dass** eine Steuereinrichtung vorgesehen ist, welche ausgebildet ist, die Schalteinrichtung in Abhängigkeit des Sauerstoffgehalts des Konvertergases vor den Vorrichtungen (8, 28) zur Entstaubung entweder der Vorrichtung (8) oder der weiteren Vorrichtung (28) zur Entstaubung zuzuleiten.

11. Verwendung einer Vorrichtung (8) nach einem der Ansprüche 1 bis 10 zur Entstaubung von Konvertergas.

12. Verwendung nach Anspruch 11 und einem der Ansprüche 9 oder 10, **dadurch gekennzeichnet, dass** das Konvertergas durch die Schalteinrichtung der Vorrichtung (8) zur Entstaubung zugeleitet wird, wenn der Sauerstoffgehalt des Konvertergases vor den Vorrichtungen (8, 28) zur Entstaubung einen vorgegebenen Schwellwert unterschreitet, insbesondere < 5 Vol%, bevorzugt < 2 Vol% ist, und der weiteren Vorrichtung (28) zur Entstaubung, wenn der Sauerstoffgehalt des Konvertergases vor den Vorrichtungen (8, 28) zur Entstaubung den vorgegebenen Schwellwert überschreitet, insbesondere > 5 Vol%, bevorzugt > 2 Vol% ist.

13. Verwendung nach Anspruch 11, **dadurch gekennzeichnet, dass** die Regenerierung der Filterelemente (18) gegen Ende einer Blasephase im Konverter, bei einem Blasefortschritt von größer 90%, durchgeführt wird.

14. Verwendung nach Anspruch 12, **dadurch gekennzeichnet, dass** die Filterelemente (18) immer dann regeneriert werden, wenn die jeweilige Vorrichtung (8, 28) zur Entstaubung nicht von Konvertergas durchströmt wird.

## Claims

1. Device (8) for removing dust from converter gas, comprising at least one housing (9) which has
a round cross section and in which one or a plurality of filter elements (18) that are able to be passed through by a flow of the converter gas is/are disposed,
per housing at least one supply line (15) for converter gas into the housing,
wherein the supply line, in terms of the operating state of the housing, below the filter elements (18) opens into the housing (9) in such a manner that an initially predominantly radial flow is configured in the housing,
**characterized in that**
the supply line (15) terminates at the housing (9) and thereon forms an elongate inflow opening (16) which in the circumferential direction of the housing (9) has a larger dimension than in the height direction (17) of the housing, wherein the interior of the housing (9) between the inflow opening (16) and the filter elements (18) is free of flow-conducting installations.

2. Device (8) according to Claim 1, **characterized in that** the ratio of the area of the inflow opening (16) to the cross-sectional area of the housing (9) at the height level of the inflow opening (16) is 1:15 to 1:35, preferably 1:25 to 1:30.

3. Device (8) according to one of Claims 1 to 2, **characterized in that** the ratio of the length (L) to the height (H) of the inflow opening (16) is in the range from 1.3 to 2.0, in particular from 1.4 to 1.7.

4. Device (8) according to one of Claims 1 to 3, **characterized in that** the ratio of the length (L) of the inflow opening (16) in the circumferential direction of the housing (9) to the circumference of the housing (9) is in the range from 0.1 to 0.2, in particular from 0.1 to 0.15.

5. Device (8) according to one of Claims 1 to 4, **characterized in that** the supply line (15) when adjoining the housing (9) has an elongate cross section which corresponds to the inflow opening (16), wherein this cross section increases in size as the spacing from the inflow opening (16) increases.

6. Device (8) according to one of Claims 1 to 5, **characterized in that** the supply line (15) directly outside the housing (9) is embodied so as to be inclined in relation to the height direction (17) of the housing (9), so that dust contained in the converter gas in the operating state of the housing can slide along the supply line (15), through the inflow opening (16), into the interior of the housing (9).

7. Device (8) according to one of Claims 1 to 6, **characterized in that** the filter elements (18) are ceramic filter elements and/or filter elements from a woven metallic fabric.

8. Device (8) according to one of Claims 1 to 7, **characterized in that** the housing (9) is equipped with cooling.

9. Device (8) according to one of Claims 1 to 8, **characterized in that** a further device (28) for removing dust is provided, said further device (28) at the gas side being separated from the device (8) for removing dust, and a switching installation which is configured to supply the converter gas either to the device (8) for removing dust or to the further device (28) for removing dust is provided.

10. Device (8) according to Claim 9, **characterized in that** a control installation is provided which, as a function of the oxygen content of the converter gas ahead of the devices (8, 28) for removing dust, is configured to supply the switching installation either to the device (8) or to the further device (28) for removing dust.

11. Use of a device (8) according to one of Claims 1 to 10 for removing dust from converter gas.

12. Use according to Claim 11 and one of Claims 9 and 10, **characterized in that** the converter gas by way of the switching installation is supplied to the device (8) for removing dust when the oxygen content of the converter gas ahead of the device (8, 28) for removing dust undershoots a predefined threshold value, in particular is < 5% by volume, preferably < 2% by volume, and is supplied to the further device (28) for removing dust when the oxygen content of the converter gas ahead of the devices (8, 28) for removing dust exceeds the predefined threshold value, in particular is > 5% by volume, preferably > 2% by volume.

13. Use according to Claim 11, **characterized in that** the regeneration of the filter elements (18) is carried out towards the end of a blowing phase in the converter, at a blowing progress of more than 90%.

14. Use according to Claim 12, **characterized in that** the filter elements (18) are always regenerated when the respective device (8, 28) for removing dust is not passed through by a flow of converter gas.

## Revendications

1. Dispositif (8) de dépoussiérage de gaz de convertisseur, comprenant au moins un boîtier (9) avec une section transversale ronde, dans lequel sont disposés un ou plusieurs éléments filtrants (18) pouvant être traversés par le gaz convertisseur, par boîtier au moins une conduite (15) pour le gaz convertisseur dans le boîtier, dans lequel la conduite - par rapport à l'état de fonctionnement du boîtier - débouche dans le boîtier (9) au-dessous des éléments filtrants (18) de manière telle que se constitue dans le boîtier un courant au départ principalement radial, **caractérisé en ce que** la conduite (15) se termine au boîtier (9) et y forme un orifice d'admission (16) oblong, lequel présente dans le sens circonférentiel du boîtier (9) une plus grande dimension que dans le sens de la hauteur (17) du boîtier, dans lequel l'intérieur du boîtier (9) entre l'orifice d'admission (16) et les éléments filtrants (18) est exempt d'éléments encastrés de guidage de flux.

2. Dispositif (8) selon la revendication 1, **caractérisé en ce que** le rapport de la surface de l'orifice d'admission (16) par rapport à la surface de section transversale du boîtier (9) à la hauteur de l'orifice d'admission (16) est de 1 :15 à 1 : 35, de préférence, 1 : 25 à 1 : 30.

3. Dispositif (8) selon l'une des revendications 1 à 2, **caractérisé en ce que** le rapport de la longueur (L) à la hauteur (H) de l'orifice d'admission (16) est de l'ordre de 1,3 à 2,0, plus particulièrement, de 1,4 à 1,7.

4. Dispositif (8) selon l'une des revendications 1 à 3, **caractérisé en ce que** le rapport de la longueur (L) de l'orifice d'admission (16) dans le sens circonférentiel du boîtier (9) par rapport à la circonférence du boîtier (9) est de l'ordre de 0,1 à 0,2, plus particulièrement, de 0,1 à 0,15.

5. Dispositif (8) selon l'une des revendications 1 à 4, **caractérisé en ce que** la conduite (15) présente à la suite du boîtier (9) une section transversale oblongue, qui correspond à l'orifice d'admission (16), cette section transversale s'évasant avec un écartement décroissant par rapport à l'orifice d'admission (16).

6. Dispositif (8) selon l'une des revendications 1 à 5, **caractérisé en ce que** la conduite (15) est réalisée inclinée directement à l'extérieur du boîtier (9) par rapport au sens de la hauteur (17) du boîtier (9), de sorte que la poussière contenue dans le gaz de convertisseur dans l'état de fonctionnement du boîtier peut glisser le long de la conduite (15) à travers l'orifice d'admission (16) à l'intérieur du boîtier (9).

7. Dispositif (8) selon l'une des revendications 1 à 6, **caractérisé en ce que** les éléments filtrants (18) sont des éléments filtrants céramiques et / ou des éléments filtrants en tissu métallique.

8. Dispositif (8) selon l'une des revendications 1 à 7, **caractérisé en ce que** le boîtier (9) est doté d'un refroidissement.

9. Dispositif (8) selon l'une des revendications 1 à 8, **caractérisé en ce qu'**un autre dispositif (28) est prévu pour le dépoussiérage, lequel est séparé côté gaz du dispositif (8) de dépoussiérage, et un dispositif de commutation qui est formé pour conduire le gaz de convertisseur soit au dispositif (8) de dépoussiérage, soit à l'autre dispositif (28) de dépoussiérage.

10. Dispositif (8) selon la revendication 9, **caractérisé en ce qu'**un dispositif de commande est prévu, lequel est formé pour conduire le dispositif de commutation en fonction de la teneur en oxygène du gaz de convertisseur devant les dispositifs (8, 28) de dépoussiérage, soit au dispositif (8) soit à l'autre dispositif (28) de dépoussiérage.

11. Utilisation d'un dispositif (8) selon l'une des revendications 1 à 10 pour le dépoussiérage de gaz de convertisseur.

12. Utilisation selon la revendication 11 et l'une des revendications 9 ou 10, **caractérisée en ce que** le gaz de convertisseur est conduit par le dispositif de commutation au dispositif (8) de dépoussiérage, lorsque la teneur en oxygène du gaz de convertisseur devant les dispositifs (8, 28) de dépoussiérage est inférieure à une valeur seuil prédéfinie, plus particulièrement < 5 % en volume, de préférence < 2 % en volume, et à l'autre dispositif (28) de dépoussiérage, lorsque la teneur en oxygène du gaz de convertisseur devant les dispositifs (8, 28) de dépoussiérage dépasse la valeur seuil, plus particulièrement > 5 % en volume, de préférence, > 2 % en volume.

13. Utilisation selon la revendication 11, **caractérisée en ce que** la régénération des éléments filtrants (18) est réalisée vers la fin d'une phase de soufflage dans le convertisseur, lors d'une progression de soufflage supérieure à 90 %.

14. Utilisation selon la revendication 12, **caractérisée en ce que** les éléments filtrants (18) sont ensuite toujours régénérés lorsque le dispositif respectif (8, 28) de dépoussiérage n'est pas traversé par le gaz de convertisseur.
